# EUROPEAN PATENT APPLICATION

(11) **EP 0 686 793 A1**
(43) Date of publication of application: **13.12.1995**
(21) Application number: 94304198.8
(22) Date of filing: 10.06.1994
(51) Int. Cl.: F16K 1/22, F01N 7/08, F02D 9/04

(54) **Valve device for controlling a high temperature fluid**

(71) Applicant: FUJI OOZX INC., Fujisawa-shi, Kanagawa-ken (JP)
(72) Inventor: Ohtsubo, Kizuku, c/o Fuji Oozx Inc., Fujisawa-shi, Kanagawa-ken (JP)
(74) Representative: Ben-Nathan, Laurence Albert

(57) **Abstract**

A first valve shaft (7) is provided for opening a valve disc (6) for a main passage (4), and a second valve shaft (13) is provided for opening a valve disc (12) for a secondary passage (5). The first and second valve shafts (7,13) are connected by a shaft coupling having a gap, so that axial thermal expansion of the valve shafts is allowable, thereby preventing unsmooth operation of the valve discs (6,12).

## Description

The present invention relates to a valve device for controlling a high temperature fluid, such as a exhaust gas which is exhausted from an internal combustion engine and passes through two passages selectively or simultaneously.

To pass an exhaust gas through two passages selectively or simultaneously, a first valve disc for opening and closing a first passage and a second valve disc for opening and closing a second passage are fixed to valve shafts perpendicular to the passages respectively, and the first and second valve discs are opened and closed by a link mechanism connected between the two valve shafts.

However, such a device increases the number of parts and makes control mechanism complicate. Also, the valve shafts goes through at least two portions of a body having the passages, so that the exhaust gas is likely to leak therethrough.

To overcome the disadvantage, it has been suggested that the first and second valve discs are provided on one valve shaft to simplify the structure and that only one portion through which the valve shafts go in the body is provided to prevent leakage of the exhaust gas.

However, in the first and second valve discs which are provided in one valve shaft, when the differences in temperature and coefficient of thermal expansion between the valve shaft and the body are large, the valve shaft thermally expands in an axial direction, so that the valve disc is engaged with the body, which causes unsmooth operation of the valve disc.

To solve the problem, it has been suggested to provide a gap for thermally expanded portion between the valve disc and the body, but leakage of exhaust gas increases when the valve disc is closed.

### SUMMARY OF THE INVENTION

In view of the foregoing disadvantages, the object of the present invention is to provide a valve device for controlling a high temperature gas for preventing unsmooth operation of a valve disc by allowing thermal expansion of a valve shaft in an axial direction.

According to the present invention, there is provided a valve device for controlling high temperature fluid, comprising a main passage for the fluid; a secondary passage for the fluid disposed in parallel with the main passage; a first valve disc provided in the main passage and perpendicular to the main passage; a second valve disc provided in the secondary passage and perpendicular to the secondary passage; a first valve shaft for rotating the first valve disc; a second valve shaft for rotating the second valve disc disposed in the same axis as that of the first valve shaft; and a shaft coupling for connecting an end of one of the first and second valve shafts with an end of the other valve shaft with a gap for allowing thermal expansion of the valve shafts.

The first valve shaft for opening and closing the valve disc for the first passage and the second valve shaft for opening and closing the valve disc for the second passage are provided respectively, and by connecting the first and second valve shafts by the shaft coupling with the gap, axially thermal expansion of the first and second valve shafts is allowable. Even if one of the valve shafts is thermally expanded, the other will not be affected by the expansion, thereby preventing unsmooth operation of opening and closing.

### BRIEF DESCRIPTION OF THE DRAWINGS

The object and advantages of the present invention will be described in detail based on an embodiment with respect to the appended drawing:
Fig. 1 is a perspective view in which a valve device of the present invention is connected to an exhaust manifold in an internal combustion engine; and
Fig. 2 is an enlarged sectional view taken along the line A-A in Fig. 1.

### DETAILED DESCRIPTION OF PREFERRED EMBODIMENT

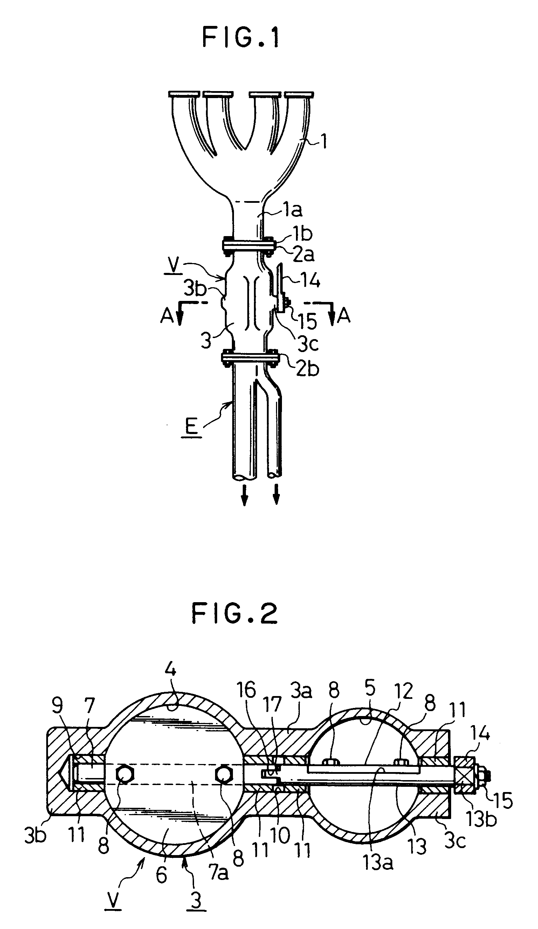

in Fig. 1, the numeral 1 denotes an exhaust manifold which is mounted to an engine (not shown). An upstream side of a valve device "V" for controlling a high temperature gas according to the present invention is connected by a flange 2a to a flange 1b at the end of a constricted portion 1a of the exhaust manifold 1. "E" denotes a forked exhaust pipe connected to the flange 2b at a downstream side.

As illustrated in Fig. 2, in a body 3 of the valve device "V", a main passage 4 having a larger passage area is formed in parallel with a secondary passage 3 having a smaller passage area, having a partition wall 3a between the two passages 3 and 4. In the main passage 4, a butterfly valve body 6 is mounted by bolts on a flat portion 7a of a first valve shaft 7 perpendicular to the passages so that it may be opened and closed. The ends of the first valve shaft 7 is pivotally mounted in bushes 11 and 11 which are inserted in a bore 9 of a portion 3b formed at the side of the body 3, and in an opening 10 through which the passage 4 communicates with the passage 5, respectively. In the secondary passage 5, a smaller valve disc 12 is mounted to a flat portion 13a of a second shaft 13 which has the same axis as that of the first valve shaft 7 by bolts 8 so that it may open and close. The ends of the second valve shaft 13 are pivotally mounted by a bush 11 pressed in the bore 10 and by a bush 11 pressed in a portion 3c of the side wall of the body 3.

The end of the second valve shaft 13 projects outwards through the side wall of the body 3, and a rectangular portion 13b thus projected is engaged with a drive lever 14 and a nut 15 for prevent missing. In the opening 10 of the partition wall 3a, a projected portion 17 at the end of the second valve shaft 13 fits in a groove 16 at the end of the first valve shaft 7 by a jack shaft coupling with a gap so that the first and second valve shafts 7 and 13 may move to each other in an axial direction. By adjusting angular displacement of the first and second valve shafts 7 and 13, one of passages 4 and 5 is completely closed by the corresponding valve disc 6 or 12, while the other passage is completely opened by the other valve disc.

As described above, in the foregoing embodiment of the valve device, the first valve shaft 7 for opening and closing the valve disc 6 for the main passage 4 and the second valve shaft 13 for opening and closing the valve disc 12 for the secondary passage 5 are provided individually, and they are connected by the jack shaft coupling so as to be movable axially. Thus, even if a high temperature gas passes through one passage such as the secondary passage 5 to let the second valve shaft 13 thermally expanded in an axial direction, the expansion is allowed in the shaft coupling and no disadvantage is given to the first valve shaft 7, thereby assuring smooth opening of the valve discs 6 and 12. Smaller contact area in the shaft coupling of the valve shafts 7 and 13 provides poor heat transfer efficiency. Even if one of the valve shafts 7 and 13 becomes high temperature, the other will not be thermally affected.

In the foregoing embodiment, a jack shaft coupling is used for a shaft coupling of the first and second valve shafts 7 and 13, but other types of shaft couplings such as a sliding key and a spline may used.

The foregoing description merely relates to preferred embodiment of the present invention. Various modifications and changes may be made without departing from the scope of claims wherein:

## Claims

1. A valve device for controlling a high temperature fluid, comprising:
a main passage for the fluid;
a secondary passage for the fluid disposed in parallel with the main passage;
a first valve disc provided in the main passage and perpendicular to the main passage;
a second valve disc provided in the secondary passage and perpendicular to the secondary passage;
a first valve shaft for rotating the first valve disc;
a second valve shaft for rotating the second valve disc disposed in the same axis as that of the first valve shaft; and
a shaft coupling for connecting an end of one of the first and second valve shafts with an end of the other valve shaft with a gap for allowing thermal expansion of the valve shafts.

2. A valve device as defined in claim 1 wherein the shaft coupling comprises a projection of one of the first and second valve shaft and a groove of the other valve shaft, the projection being engaged in the groove with the gap for allowing thermal expansion of the valve shafts.
